# EUROPEAN PATENT SPECIFICATION

(11) **EP 0 501 782 B1**
(45) Date of publication and mention of the grant of the patent: **31.01.1996**
(21) Application number: 92301624.0
(22) Date of filing: 26.02.1992
(51) Int. Cl.: B60C 9/18, B60C 9/20

(54) **Pneumatic tyre**
Luftreifen
Pneumatique

(30) Priority: 28.02.1991 JP 77435/91
(43) Date of publication of application: 02.09.1992
(73) Proprietor: SUMITOMO RUBBER INDUSTRIES LIMITED, Kobe-shi Hyogo-ken (JP)
(72) Inventor: Iseki, Tsutomu, Nishi-shirakawa-gun, Fukushima-ken (JP); Sakamoto, Masayuki, Shirakawa-shi, Fukushima-ken (JP)
(74) Representative: Stewart, Charles Geoffrey

(56) References cited:
- DE-A- 2 735 881
- GB-A- 1 254 857
- GB-A- 2 084 623
- US-A- 3 770 042
- US-A- 4 600 456

## Description

The present invention relates to a pneumatic tyre and more particularly an improvement in a tread reinforcing belt.

In general, a radial pneumatic tyre is provided radially outside the carcass with a belt to reinforce the tread portion.

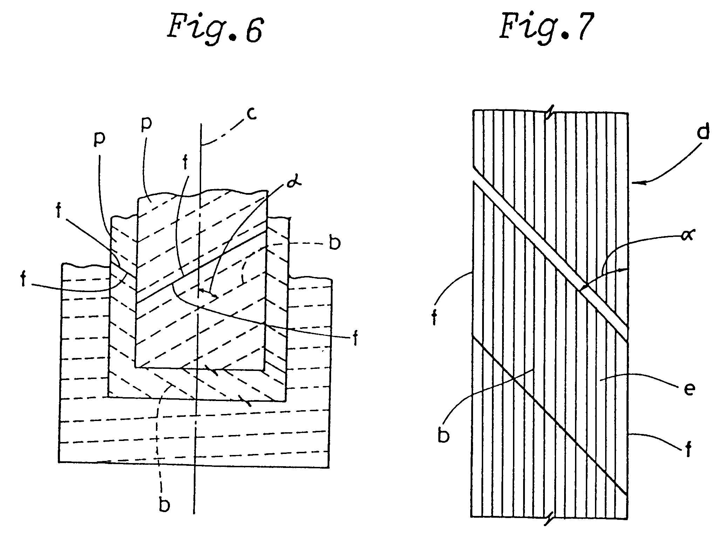

In a conventional belt structure, as shown in Figs. 6 and 7, belt plies (p) are formed by wrapping a strip (e) of rubberised parallel cords (b) around the carcass. The strip (e) of rubberised parallel cords (b) is made by cutting a sheet of tyre fabric (d) at a bias angle (alpha). The ends (f) of the strip (e) are joined by overlapping one end on the other with a small overlap, and a lap joint running at a bias angle (alpha) is thus formed. Each belt ply also has two side edges around the tyre circumference which have cut ends for the cords forming the belt.

As a result of the bias joint, steering stability and directional stability during straight running are liable to be disturbed. This is particularly seen during high speed running. Further, durability is impaired due to the cord cut ends where rubber/cord separation failure arises in service leading to breaker edge looseness.

In order to solve those problems, a jointless belt formed by spirally winding a continuous cord around the carcass at a small angle to the tyre equator has been proposed in, for example, Japanese Utility-Model Publication No.58-160805. However, due to such a spiral cord arrangement, drifting of the vehicle to one side is liable to occur as the tyre has a sideways bias.

Tyres having a belt made from a cord reinforced ribbon of rubber wound continuously around the tyre carcass and lying obliquely between the belt edges with first cord segments laid crosswise to second cord segments are known, for example, from GB-A-1254857, US-A-3770042 and US-A-4600465 which forms the preamble of claim 1.

It is therefore the object of the present invention to provide an improved pneumatic tyre without such problems of stability, durability and drifting.

According to one aspect of the present invention, a pneumatic tyre comprising a carcass extending between beads, and a belt disposed radially outside the carcass and inside a tread and having opposite axial edges, said belt made of a ribbon of rubber in which a plurality of continuous cords are embedded in parallel with each other along the longitudinal direction thereof, said ribbon wound continuously around the carcass a plural number of times, lying zigzag between the edges of the belt, so that the belt is composed of said plurality of continuous cords wound around the carcass lying zigzag between the edges of the belt to define oblique cord segments extending between the edges of the belt, said oblique cord segments including first oblique cord segments laid substantially parallel with each other, and second oblique cord segments laid substantially parallel with each other and crosswise to said first oblique cord segments and located radially outside of said first oblique cord segments characterised in that said ribbon is axially bent at said edges without being folded back, so that said plurality of continuous cords run zigzag continuously and in parallel with each other all over the length inclusive of the bent part, and in said plural number of windings of the ribbon, at each of the edges, the bent portions are alternately shifted in the axial direction of the tyre.

Embodiments of the present invention will now be described in detail in conjunction with the accompanying drawings, in which:

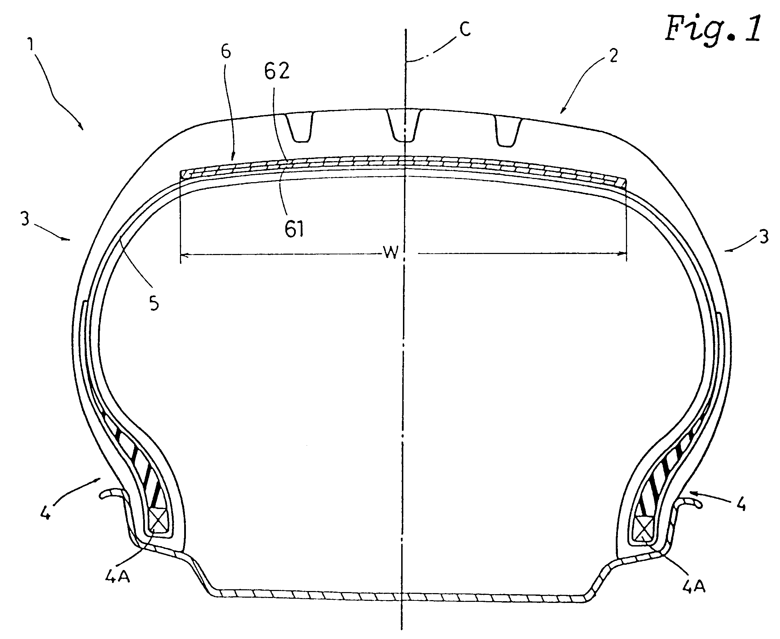

Fig.1 is a cross sectional view of a tyre according to the present invention;
Fig.2 is a developed plan view explaining a belt making method;
Fig.3 is a perspective view of a ribbon of reinforced rubber used therein;
Fig.4 is a schematic view explaining a modification to the belt formed by the method of Fig.2;
Fig.5 is a schematic view of a belt according to the present invention;
Fig.6 is a developed plan view of a carcass and conventional belt structure; and
Fig.7 is a plan view of the tyre fabric used to form the conventional belt.

In the figures, a pneumatic tyre 1 has a tread portion 2, a pair of axially spaced bead portions 4, and a pair of sidewall portions 3 extending between the tread edges and the bead portions 4. The tyre 1 comprises a bead core 4A disposed in each bead portion 4, a toroidal carcass 5 extending between the bead portions 4 and turned up around the bead cores 4A, and a jointless belt 6 disposed radially outside the carcass 5 and inside the tread.

The carcass 5 in this embodiment comprises one ply of organic fibre cords, e.g. nylon, aromatic polyamide or the like, arranged radially at an angle of 60 to 90 degrees with respect to the tyre equator C so as to provide a radial or a so called semiradial ply construction.

The belt 6 comprises at least one continuous cord which is wound at least once around the carcass while running zigzag from one edge to the other edge of the belt, so that the or each belt cord has first parallel cord segments inclined at a bias angle (alpha) with respect to the tyre equator and second parallel cord segments inclined at the same bias angle (alpha) but in the opposite symmetrical direction with respect to the tyre equator.

Note that each cord segment is a substantially straight cord portion defined as extending from one edge to the other edge of the belt.

By such an arrangement of the cord segments, the first cord segments cross the second cord segments.

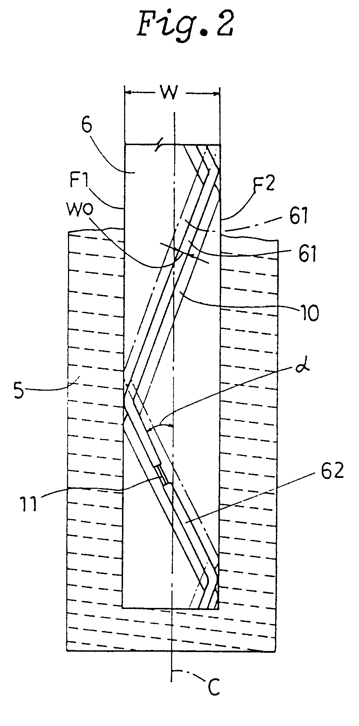

Fig.2 shows a method of making a belt comprising at least one cord continuously wound around the carcass while lying zigzag between the edges of the belt.

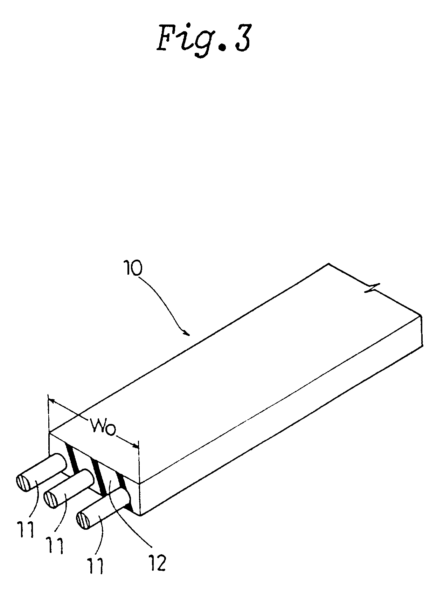

In this method, as shown in Fig.3, a ribbon 10 of width Wo is bent axially of the tyre, that is, in the widthwise direction of the belt but not folded back neither radially outwardly nor radially inwardly.

The ribbon 10 is wound around the tyre a plurality of times (n) as follows:

In the first winding, the ribbon 10 extends at an angle (alpha) from a starting point to one of the belt edges F1 and F2, for example, the left side edge F1;
A) at the left side edge F1, the ribbon is bent to the other right side edge F2;
B) the next section of ribbon extends at angle (alpha) to the right side edge F2;
C) at the right side edge F2, the ribbon is bent to the left side edge F1;
D) the next section of ribbon extends at angle (alpha) to the left side belt edge F1;
A) to D) are repeated until the ribbon returns to the starting point of the second winding which point is adjacent to the previous starting point.

In the subsequent second winding around the tyre and third, fourth, --- and last (n)th windings, the ribbon is wound in the same way as the first winding, whereby the radially inner and outer cord segments similar to those by the above-explained folding method are formed.

In Fig.2, the ribbon 10 is bent smoothly at the belt edges, that is the bent portions are rounded.

For smooth bending at the belt edges, the angle (alpha) of the ribbon or belt cords 11 is preferably set to be a value in the range of 10 to 25 degrees with respect to the tyre equator.

The width of the ribbon is also set to be a value less than about 5 mm for the same reason.

In this example, therefore, the number of the cords embedded in the ribbon is 3.

Thus, a plurality of cords 11 run zigzag continuously and in parallel with each other all over the length inclusive of the bent parts.

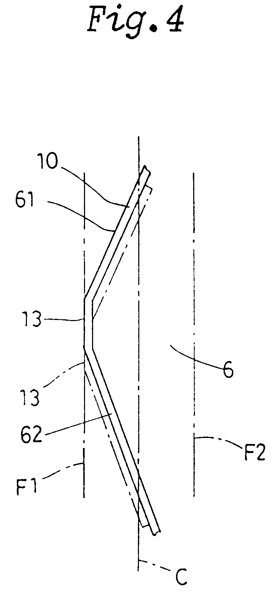

Fig.4 shows a modification of the above-mentioned bending method and explains a modification of the above-mentioned round bent part.

In this case, circumferential segments 13 are formed between the adjacent oblique segments 61 and 62, whereby the bending angles formed between the adjacent segments (13 and 62) and (13 and 61) are decreased to 1/2 of the angle between the oblique segments 61 and 62. Further, the differences in length between the cord paths are absorbed by the circumferential segments 13.

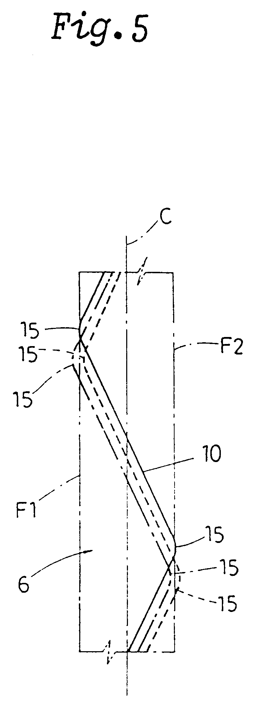

In accordance with the present invention the bent portions of the ribbon, inclusive of such a bent portion including a circumferential segment 13, are be shifted alternately in the axial direction of the tyre to avoid an excessive increase in the belt thickness at the edges, as shown in Fig.5.

In the precent bending method, after one belt layer is formed, that is the ribbon returns to the first starting point, a further layer can he formed successively thereon by continuously winding the ribbon therearound.

In such a case, the axial extent W of the zigzag is preferably changed to be narrower or wider than the other layer.

Furthermore, a belt layer made of a strip of conventional tyre fabric can be combined with the above-mentioned zigzag cord belts 6, 6a and 6b.

For example, a fabric belt layer may be disposed radially outside or inside the zigzag cord belt.

As described above, in the pneumatic tyre according to the present invention, the belt is provided with an endless structure with respect to the circumferential direction of the tyre, and there is no cord cut end at the edges, and further, the first cord segments cross the second cord segments.

Therefore, belt edge looseness and rubber separation are effectively prevented, and durability of the tread portion is improved. The endless structure and cross structure provide a rigid and uniform reinforcement for the tread portion, and straight running performance and steering stability are improved.

## Claims

1. A pneumatic tyre comprising a carcass (5) extending between beads (4), and a belt (6) disposed radially outside the carcass (5) and inside a tread (2) and having opposite axial edges, said belt (6) made of a ribbon (10) of rubber in which a plurality of continuous cords are embedded in parallel with each other along the longitudinal direction thereof, said ribbon (10) wound continuously around the carcass (5) a plural number of times, lying zigzag between the edges (F1,F2) of the belt (6), so that the belt (6) is composed of said plurality of continuous cords wound around the carcass (5) lying zigzag between the edges of the belt (6) to define oblique cord segments extending between the edges (F1,F2) of the belt (6), said oblique cord segments including first oblique cord segments laid substantially parallel with each other, and second oblique cord segments laid substantially parallel with each other and crosswise to said first oblique cord segments and located radially outside of said first oblique cord segments, characterised in that said ribbon (10) is axially bent at said edges (F1,F2) without being folded back, so that said plurality of continuous cords run zigzag continuously and in parallel with each other all over the length inclusive of the bent part, and in said plural number of windings of the ribbon (10), at each of the edges (F1,F2), the bent portions are alternately shifted in the axial direction of the tyre.

2. A tyre according to claim 1, characterised in that between the adjacent oblique cord segments, said ribbon (10) is bent axially of the tyre so that a circumferential cord segment is formed in each of the bent portions between the adjacent oblique cold segments.

3. A tyre according to either of claims 1 or 2, characterised in that the angle (α) of the cords in the oblique cord segments is in the range of 10 to 25 degrees to the tyre circumferential direction.

4. A tyre according to any of claims 1 to 3, characterised in that the width of the ribbon (10) is 5mm or less.

## Patentansprüche

1. Ein Luftreifen mit einer Karkasse (5), die sich zwischen Wülsten (4) erstreckt, und einem Gürtel (6), der radial außerhalb der Karkasse (5) angeordnet ist und innerhalb einer Lauffläche (2) und entgegengesetzte axiale Ränder aufweist, wobei der Gürtel (6) aus einem Band (10) aus Gummi hergestellt ist, in welchem eine Vielzahl kontinuierlicher Korde parallel zueinander längs der longitudinalen Richtung davon eingebettet sind, wobei das Band (10), das kontinuierlich um die Karkasse (5) eine Vielzahl von Malen gewickelt ist, zickzack zwischen den Rändern (F1, F2) des Gürtels (6) liegt, so daß der Gürtel (6) aus der Vielzahl von kontinuierlichen Korden, die um die Karkasse (5) gewickelt sind, die zickzack zwischen den Rändern des Gürtels (6) liegen, um schräge Kordsegmente zu definieren, die sich zwischen den Rändern (F1, F2) des Gürtels (6) erstrecken, zusammengesetzt ist, wobei die schrägen Kordsegmente erste schräge Kordsegmente umfassen, die im wesentlichen parallel zueinander gelegt sind, und zweite schräge Kordsegmente, die im wesentlichen parallel zueinander und kreuzweise zu den ersten schrägen Kordsegmenten gelegt sind und radial außerhalb der ersten schrägen Kordsegmente angeordnet sind,
dadurch **gekennzeichnet,**
daß das Band (10) axial bei den Rändern (F1, F2) gebogen ist, ohne zurückgeschlagen zu sein, so daß die Vielzahl kontinuierlicher Korde zickzack kontinuierlich und parallel zueinander über die gesamte Länge einschließlich des gebogenen Teils verläuft, und in der pluralen Zahl von Wicklungen des Bandes (10) bei jedem der Ränder (F1, F2) die gebogenen Teile alternierend in der axialen Richtung des Reifens verschoben sind.

2. Ein Reifen nach Anspruch 1,
dadurch **gekennzeichnet,**
daß zwischen den angrenzenden schrägen Kordsegmenten das Band (10) axial des Reifens gebogen ist, so daß ein Umfangskordsegment in jedem der gebogenen Teile zwischen den angrenzenden schrägen Kordsegmenten gebildet ist.

3. Ein Reifen nach einem der Ansprüche 1 oder 2,
dadurch **gekennzeichnet,**
daß der Winkel (alpha) der Korde in den schrägen Kordsegmenten in dem Bereich von 10 bis 25 Grad zu der Reifenumfangsrichtung liegt.

4. Ein Reifen nach einem der Ansprüche 1 bis 3,
dadurch **gekennzeichnet,**
daß die Breite des Bandes (10) 5 mm oder weniger beträgt.

## Revendications

1. Pneumatique comprenant une carcasse (5) placée entre des talons (4), et une ceinture (6) placée radialement à l'extérieur de la carcasse (5) et dans une bande de roulement (2) et ayant des bords axiaux opposés, la ceinture (6) étant formée d'un ruban (10) de caoutchouc dans lequel plusieurs câblés continus sont enrobés parallèlement les uns autres dans leur direction longitudinale, le ruban (10) étant enroulé de façon continue autour de la carcasse (5) plusieurs fois et étant placé de manière sinueuse entre les bords (F1, F2) de la ceinture (6), si bien que la ceinture (6) est composée des câblés continus enroulés autour de la carcasse (5) et placés de manière sinueuse entre les bords de la ceinture (6) afin que les segments obliques de câblé soient délimités entre les bords (F1, F2) de la ceinture (6), ces segments obliques de câblé comprenant des premiers segments obliques qui sont parallèles les uns aux autres et des seconds segments obliques qui sont parallèles les uns aux autres et qui recoupent les premiers segments obliques de câblé et qui sont placés radialement à l'extérieur des premiers segments obliques de câblé, caractérisé en ce que le ruban (10) est courbé axialement aux bords (F1, F2) sans être plié si bien que les câblés continus sont disposés de façon continue sous forme sinueuse et parallèlement les uns aux autres sur toute la longueur y compris la partie courbée, et en ce que plusieurs enroulements du ruban (10), à chacun des bords (F1, F2) assurent un décalage alterné des parties courbées dans la direction axiale du pneumatique.

2. Pneumatique selon la revendication 1, caractérisé en ce que, entre les segments adjacents obliques, le ruban (10) est courbé axialement par rapport au pneumatique afin qu'un segment circonférentiel de câblé soit formé dans chacune des parties courbées entre les segments obliques adjacents de câblé.

3. Pneumatique selon l'une des revendications 1 et 2, caractérisé en ce que l'angle (α) des câblés dans les segments obliques est de l'ordre de 10 à 25° par rapport à la direction circonférentielle du pneumatique.

4. Pneumatique selon l'une quelconque des revendications 1 à 3, caractérisé en ce que la largeur du ruban (10) est inférieure ou égale à 5 mm.
